# EUROPÄISCHE PATENTSCHRIFT

(11) **EP 0 995 247 B1**
(45) Veröffentlichungstag und Bekanntmachung des Hinweises auf die Patenterteilung: **14.11.2001**
(21) Anmeldenummer: 98941315.8
(22) Anmeldetag: 11.07.1998
(51) Int. Cl.: H02B 1/32, H02B 1/20

(54) **KABELEINFÜHRUNG FÜR EINEN SCHALTSCHRANK**
CABLE ENTRY FOR A SWITCH CABINET
ENTREE DE CABLES POUR ARMOIRE DE DISTRIBUTION

(30) Priorität: 16.07.1997 DE 19730428
(43) Veröffentlichungstag der Anmeldung: 26.04.2000
(73) Patentinhaber: Rittal-Werk Rudolf Loh GmbH & Co. KG, 35745 Herborn (DE)
(72) Erfinder: REUTER, Wolfgang, D-57299 Burbach (DE)
(74) Vertreter: Fleck, Hermann-Josef, Dr.-Ing.
(86) Internationale Anmeldenummer: EP9804303
(87) Internationale Veröffentlichungsnummer: WO9904471

(56) Entgegenhaltungen:
- DE-A- 2 720 936
- DE-C- 19 604 219
- DE-U- 7 816 729

## Beschreibung

Die Erfindung betrifft eine Kabeleinführung für einen Schaltschrank mit einer von einer Verbindungsauflage umschlossenen Öffnung in der Bodenseite eines Schaltschrankes, bei der die Öffnung mittels aneinanderreihbaren und mit der Verbindungsauflage verbindbaren Bodenblechen verschließbar ist, wobei die einander zugeordneten Seiten benachbarter Bodenbleche abgewinkelte Ränder mit daran festgelegten Dichtungsstreifen aufweisen und die Kabel zwischen den Dichtungsstreifen in den Schaltschrank eingeführt und durch Verformung der Dichtungsstreifen abgedichtet sind.

Eine derartige Kabeleinführung ist aus der DE 78 16 729 U1 bekannt. Die Dichtungsstreifen sind dabei als Kunststoff-Schaumstoffblöcke ausgebildet. Werden benachbarte Bodenbleche aneinandergereiht, dann werden die zwischen den Kunststoff-Schaumstoffblöcken benachbarter Bodenbleche eingeführten Kabel abgedichtet, wenn bei der Aneinandereihung die Bodenbleche gegeneinander gedrückt und dabei die Kunststoff-Schaumstoffblöcke verformt werden. Die Ränder der Bodenbleche sind dabei einheitlich nach einer Seite der Bodenbleche abgekantet, so daß bei einer ausreichend breiten Abdichtungsstelle auf dieser Seite der Bodenbleche genügend Platz für diese Ränder vorhanden sein muß. Dadurch wird der Installationsraum über dem Bodenblech entsprechend verkleinert.

Wie die DE 196 04 219 C1 zeigt, ist es auch bekannt, an der einen Seite eines Bodenbleches einen zusätzlichen Rand anzubringen, der zur anderen Seite des Bodenbleches gerichtet ist. Damit werden außerhalb des Dichtungsstreifens Randbereiche geschaffen, die mit einer Reihe von Befestigungsmitteln zum zugentlasteten und/oder elektrisch leitenden Verbinden der Kabel mit dem Bodenblech versehen sein können.

Es ist Aufgabe der Erfindung, eine Kabeleinführung der eingangs erwähnten Art zu schaffen, die eine ausreichend breite Abdichtungsstelle bringt, ohne den Installationsraum über und unter dem Bodenblech wesentlich einzuschränken und ohne das Bodenblech in der Herstellung nennenswert zu verteuern.

Diese Aufgabe wird nach der Erfindung dadurch gelöst, daß die Ränder der Bodenbleche als Doppelfalz ausgebildet sind, von denen ein erster Abschnitt nach der Ober- oder Unterseite des Bodenbleches gerichtet ist, während sich der zweite Endabschnitt des Doppelfalzes sowohl über den ersten Abschnitt erstreckt und gegenüber der Unter- oder Oberseite des Bodenbleches absteht, und daß sich der Dichtungsstreifen über die Breite des Endabschnittes des Doppelfalzes erstreckt.

Der als Doppelfalz ausgebildete Rand des Bodenbleches ist einfach herstellbar und erstreckt sich zu beiden Seiten des Bodenbleches, so daß sowohl über als auch unter dem Bodenblech der Installationsraum selbst bei breiterer Abdichtungsstelle nur unwesentlich eingeschränkt wird.

Damit das Bodenblech auf einfache Weise mit der Verbindungsauflage des Schaltschrankes verbunden werden kann, sieht eine Ausgestaltung vor, daß das Bodenblech an den doppelfalzlosen Seiten mit Auflagerändern über den Doppelfalz hinaus verlängert ist. Der Doppelfalz behindert dann das Auflegen des Bodenbleches auf der Verbindungsauflage des Schaltschrankes nicht.

Wird an nur einer Seite des Bodenbleches eine Kabeleinführung vorgesehen, dann ist das Bodenblech so vereinfacht, daß die Bodenbleche an der dem Doppelfalz gegenüberliegenden Seite mit einem einfach abgekanteten Rand versehen sind.

Der einfach abgekantete Rand beeinträchtigt die Verbindung des Bodenbleches mit der Verbindungsauflage dann nicht, wenn vorgesehen ist, daß der einfach abgekantete Rand an der Unterseite des Bodenbleches absteht und vor den Auflageabschnitten des Bodenbleches endet.

Die Ecken der Auflageabschnitte des Bodenbleches sind vorzugsweise abgeschrägt.

Eine bevorzugte Ausgestaltung ist dadurch gekennzeichnet, daß der Endabschnitt des Doppelfalzes über gleiche Teile an der Ober- und Unterseite des Bodenbleches vorsteht.

Ist eine zugentlastete oder elektrisch leitende Verbindung der Kabel am Bodenblech erwünscht, dann ist nach einer weiteren Ausgestaltung vorgesehen, daß der Endabschnitt des Doppelfalzes zumindest einseitig über den festgelegten Dichtungsstreifen hinaus verbreitet und in diesem Bereich mit mindestens einer Reihe von Befestigungsmitteln zur zugentlasteten und/oder elektrisch leitenden Verbindung der Kabel mit dem Bodenblech versehen ist,

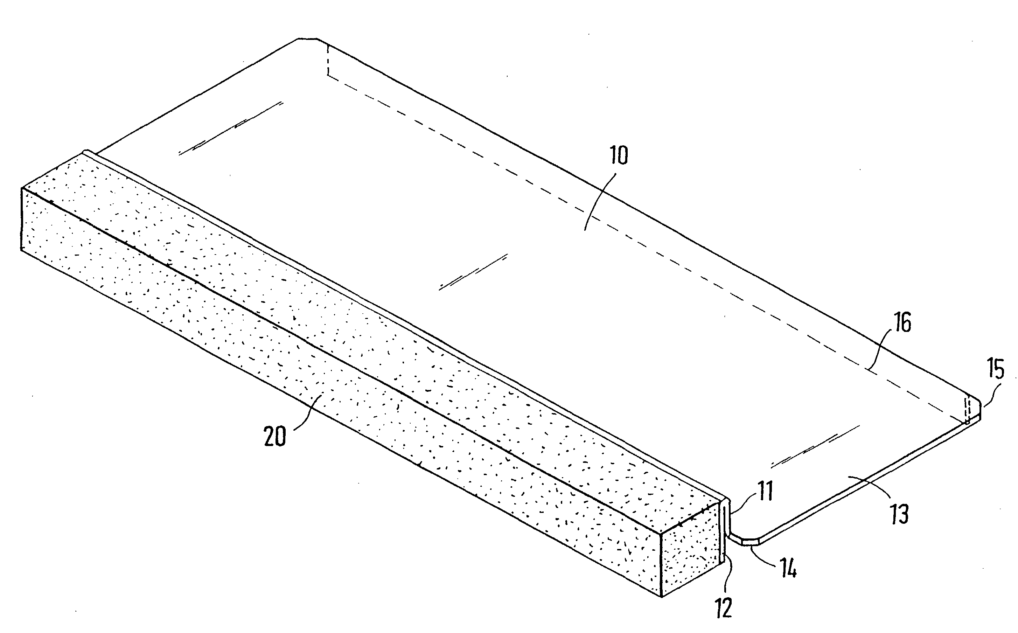

Die Erfindung wird anhand eines in der Zeichnung in Perspektive dargestellten Ausführungsbeispiels näher erläutert.

Das in der Zeichnung perspektivisch dargestellte Bodenblech 10 ist rechteckförmig ausgebildet und nur auf einer Längsseite als Kabeleinführung vorgesehen. Diese Längsseite trägt einen Doppelfalz, der auf einfache Weise auf diese Seite des Bodenbleches 10 abgekantet wird. Dabei ist ein erster Abschnitt 11 zur Oberseite des Bodenbleches 10 gerichtet und ein Endabschnitt 12 erstreckt sich über den ersten Abschnitt 11, liegt auf diesem auf und steht auch nicht an der Unterseite des Bodenbleches 10 vor. Der als Kunststoff-Schaumstoffblock ausgebildete Dichtungsstreifen 20 erstreckt sich über die gesamte Breite des Endabschnittes 12. Der Doppelfalz endet an beiden Enden vor den Schmalseiten des Bodenbleches 10, die als Auflageränder 13 zur Verbindung des Bodenbleches 10 mit der Verbindungsauflage des Schaltschrankes dienen. Die Ecken des Bodenbleches 10 sind abgeschrägt, wie mit den Abschrägungen 14 und 15 gezeigt ist. Auf der dem Doppelfalz mit dem Dichtungsstreifen 20 gegenüberliegenden Seite trägt das Bodenblech 10 einen zur Unterseite hin abgewinkelten einfachen Rand 16, der entsprechend dem Doppelfalz vor den Auflagerändern 13 endet. Selbstverständlich kann auch diese Seite des Bodenbleches 10 mit einem Doppelfalz und einem Dichtungsstreifen 20 versehen sein. Außerdem kann der erste Abschnitt 11 zur Unterseite und der einfach abgekantete Rand 16 des Bodenbleches 10 auch zur Oberseite des Bodenbleches 10 gerichtet sein.

Der Endabschnitt 12 kann auch über den Dichtungsstreifen 20 hinaus verbreitert sein und in diesem verbreiterten Bereich mit einer Reihe von Befestigungsmitteln zum zugentlasteten und/oder elektrisch leitenden Verbinden der eingeführten Kabel mit dem Bodenblech 10 versehen sein.

## Patentansprüche

1. Kabeleinführung für einen Schaltschrank mit einer von einer Verbindungsauflage umschlossenen Öffnung in der Bodenseite eines Schaltschrankes, bei der die Öffnung mittels aneinanderreihbaren und mit der Verbindungsauflage verbindbaren Bodenblechen (10) verschließbar ist, wobei die einander zugeordneten Seiten benachbarter Bodenbleche (10) abgewinkelte Ränder mit daran festgelegten Dichtungsstreifen (20) aufweisen und die Kabel zwischen den Dichtungsstreifen (20) in den Schaltschrank eingeführt und durch Verformung der Dichtungsstreifen (20) abgedichtet sind,
**dadurch gekennzeichnet,**
**daß** die Ränder der Bodenbleche (10) als Doppelfalz ausgebildet sind, von denen ein erster Abschnitt (11) nach der Ober- oder Unterseite des Bodenbleches (10) gerichtet ist, während sich der zweite Endabschnitt (12) des Doppelfalzes sowohl über den ersten Abschnitt (11) erstreckt und gegenüber der Unter- oder Oberseite des Bodenbleches (10) absteht, und daß sich der Dichtungsstreifen (20) über die Breite des Endabschnittes (12) des Doppelfalzes erstreckt.

2. Kabeleinführung nach Anspruch 1,
**dadurch gekennzeichnet,**
**daß** das Bodenblech (20) an den doppelfalzlosen Seiten mit Auflagerändern (13) über den Doppelfalz hinaus verlängert ist.

3. Kabeleinführung nach Anspruch 1 oder 2,
**dadurch gekennzeichnet,**
**daß** die Bodenbleche (20) an der dem Doppelfalz gegenüberliegenden Seite mit einem einfach abgekanteten Rand (16) versehen sind.

4. Kabeleinführung nach Anspruch 3,
**dadurch gekennzeichnet,**
**daß** der einfach abgekantete Rand (16) an der Unterseite des Bodenbleches (20) absteht und vor den Auflageabschnitten (13) des Bodenbleches (20) endet.

5. Kabeleinführung nach einem der Ansprüche 2 bis 4,
**dadurch gekennzeichnet,**
**daß** die Ecken der Auflageabschnitte (13) mit Abschrägungen (14,15) versehen sind.

6. Kabeleinführung nach einem der Ansprüche 1 bis 5,
**dadurch gekennzeichnet,**
**daß** der Endabschnitt (12) des Doppelfalzes über gleiche Teile an der Ober- und Unterseite des Bodenbleches (20) vorsteht.

7. Kabeleinführung nach einem der Ansprüche 1 bis 5,
**dadurch gekennzeichnet,**
**daß** der Endabschnitt (12) des Doppelfalzes zumindest einseitig über den festgelegten Dichtungsstreifen (20) hinaus verbreitet und in diesem Bereich mit mindestens einer Reihe von Befestigungsmitteln zur zugentlasteten und/oder elektrisch leitenden Verbindung der Kabel mit dem Bodenblech (20) versehen ist.

## Claims

1. Cable entry for a switch cabinet with an opening, enclosed by a connecting support, in the base side of a switch cabinet, in the case of which the opening can be closed off by means of base plates (10) which can be positioned one beside the other in a row and can be connected to the connecting support, it being the case that the mutually associated sides of adjacent base plates (10) have angled borders with sealing strips (20) secured thereon, and the cables are introduced into the switch cabinet between the sealing strips (20) and are sealed by deformation of the sealing strips (20), **characterized in that** the borders of the base plates (10) are designed as double folds, of which a first section (11) is directed towards the top side or underside of the base plate (10), while the second, end section (12) of the double fold both extends over the first section (11) and projects in relation to the underside or top side of the base plate (10), and **in that** the sealing strip (20) extends over the width of the end section (12) of the double fold.

2. Cable entry according to Claim 1, **characterized in that**, on the double-fold-free sides, the base plate (10) is extended beyond the double fold by way of support borders (13).

3. Cable entry according to Claim 1 or 2,
**characterized in that**, on the side located opposite the double fold, the base plates (10) are provided with a once-angled border (16).

4. Cable entry according to Claim 3, **characterized in that** the once-angled border (16) projects on the underside of the base plate (10) and terminates in front of the support sections (13) of the base plate (10).

5. Cable entry according to one of Claims 2 to 4, **characterized in that** the corners of the support sections (13) are provided with bevels (14, 15).

6. Cable entry according to one of Claims 1 to 5, **characterized in that** the end section (12) of the double fold projects beyond identical parts on the top side and underside of the base plate (10).

7. Cable entry according to one of Claims 1 to 5, **characterized in that** the end section (12) of the double fold extends at least on one side beyond the secured sealing strip (20) and, in this region, is provided with at least one row of fastening means for the strain-bearing and/or electrically conductive connection of the cables to the base plate (10).

## Revendications

1. Passage de câble pour une armoire de connexion, avec une ouverture entourée d'un support de liaison sur le côté du fond d'une armoire de connexion, dans lequel l'ouverture peut être fermée au moyen de tôles de fond (10) aptes à être reliées au support de liaison et à être placées en série les unes contre les autres, les côtés mutuellement associés de tôles de fond (10) voisines présentant des bords rabattus sur lesquels est fixée une bande d'étanchéité (20), les câbles étant passés dans l'armoire de connexion entre les bandes d'étanchéité (20) et étant rendus étanches par déformation des bandes d'étanchéité (20), **caractérisé en ce que** les bords des tôles de fond (10) sont configurés en double pli dont une première partie (11) est orientée vers le côté supérieur ou le côté inférieur de la tôle de fond (10), la deuxième partie (12) d'extrémité du double pli s'étendant à la fois le long de la première partie (11) et étant située à distance du côté supérieur ou du côté inférieur de la tôle de fond (10), et **en ce que** la bande d'étanchéité (20) s'étend sur la largeur de la partie d'extrémité (12) du double pli.

2. Passage de câble selon la revendication 1, **caractérisé en ce que** sur les côtés sans double pli, la tôle de fond (20) est prolongée par des bords de pose (13) au-delà du double pli.

3. Passage de câble selon les revendications 1 ou 2, **caractérisé en ce que** sur le côté opposé au double pli, les tôles de fond (20) sont dotées d'un bord (16) à simple rabat.

4. Passage de câble selon la revendication 3, **caractérisé en ce que** le bord (16) à simple rabat déborde vers le côté inférieur de la tôle de fond (20) et se termine avant les parties de pose (13) de la tôle de fond (20).

5. Passage de câble selon l'une des revendications 2 à 4, **caractérisé en ce que** les coins des parties de pose (13) sont dotés de découpes obliques (14, 15).

6. Passage de câble selon l'une des revendications 1 à 5, **caractérisé en ce que** la partie d'extrémité (12) du double pli déborde au-dessus de parties identiques sur le côté supérieur et le côté inférieur de la tôle de fond (20).

7. Passage de câble selon l'une des revendications 1 à 5, **caractérisé en ce qu'**au moins d'un côté, la partie d'extrémité (12) du double pli s'élargit vers l'extérieur au-delà de la bande d'étanchéité (20) immobilisée, et dans cette zone, elle est dotée d'au moins une série de moyens de fixation en vue d'une liaison délestée en traction et/ou électriquement conductrice du câble à la tôle de fond (20).
